(19) Europäisches Patentamt
European Patent Office
Office européen des brevets

(11) EP 4 206 471 A1

(12) EUROPÄISCHE PATENTANMELDUNG

(43) Veröffentlichungstag:
05.07.2023   Patentblatt 2023/27

(21) Anmeldenummer: 22196812.6

(22) Anmeldetag: 21.09.2022

(51) Internationale Patentklassifikation (IPC):
F04D 15/00 (2006.01)

(52) Gemeinsame Patentklassifikation (CPC):
F04D 15/0066; F05D 2270/3013; F05D 2270/3015;
F05D 2270/705

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 30.12.2021   LU 501134

(71) Anmelder: WILO SE
44263 Dortmund (DE)

(72) Erfinder:
• Fiedler, Jens Olav
  44263 Dortmund (DE)
• Graurock, David
  44263 Dortmund (DE)
• Welzel, Jaan
  44263 Dortmund (DE)

(74) Vertreter: Cohausz Hannig Borkowski Wißgott
Patentanwaltskanzlei GbR
Schumannstraße 97-99
40237 Düsseldorf (DE)

(54) VERFAHREN ZUR REGELUNG EINER KREISELPUMPE

(57) Die Erfindung betrifft ein Verfahren und eine Regelungselektronik zur Regelung des Drucks (p_Act) oder der Förderhöhe (H) einer Kreiselpumpe (2) unter Verwendung eines Hydraulikreglers (4), dem die Regelabweichung eines Istwerts (p_Act) zu einem Sollwert (p_ref) zugeführt wird und der eine Stellgröße (X) ausgibt, und eines dem Hydraulikregler (4) nachgelagerten Drehzahlreglers (6), der in Abhängigkeit der Stellgröße (X) einen Drehzahlwert (n) zur Einstellung an der Kreiselpumpe (2) ausgibt, wobei die Wurzel der Stellgröße (X) berechnet wird und der Drehzahlregler (6) den Drehzahlwert (n) in Abhängigkeit der Wurzel der Stellgröße (X) bestimmt. Die Erfindung betrifft ferner eine Kreiselpumpe umfassend eine derartige Regelungselektronik.

Fig. 3

EP 4 206 471 A1

**Beschreibung**

Die vorliegende Erfindung betrifft ein Verfahren zur Regelung des Drucks oder der Förderhöhe einer Kreiselpumpe unter Verwendung eines Hydraulikreglers, dem die Regelabweichung eines Istwerts zu einem Sollwert zugeführt wird und der eine Stellgröße ausgibt, und eines dem Hydraulikregler nachgelagerten Drehzahlreglers, der in Abhängigkeit der Stellgröße einen Drehzahlwert zur Einstellung an der Kreiselpumpe ausgibt.

Kreiselpumpen besitzen ein nichtlineares Verhalten. Ihre Integration in einem hydraulischen Rohrleitungsnetzwerk mit veränderlicher Last, wie beispielsweise einer Zentralheizungsanlage, einem Kühlungssystem oder einer Trinkwasserversorgung mit Zapfstellen, führt zu einem zeitveränderlichen nichtlinearen System. Dies macht es schwierig, einen Standardregler wie beispielsweise einen PID-Regler für die Regelung des Drucks oder der Förderhöhe der Kreiselpumpe zu entwerfen, der in allen Betriebspunkten stets dieselbe dynamische Reaktionsfähigkeit aufweist. In der Regel ist die Reaktion des Reglers von der Drehzahl der Kreiselpumpe einerseits und von der Anlagenkennlinie bzw. dem aktuellen hydraulischen Widerstand des Rohrleitungsnetzwerks andererseits abhängig. Der hydraulische Widerstand ändert sich zeitlich, je nach Bedarf der Verbraucher, die von der Kreiselpumpe mit einem Wärmeträgermedium oder einem Kühlmedium versorgt werden.

Dieses nichtlineare Verhalten wird entweder akzeptiert, oder es werden Affinitätsgesetze herangezogen, um einen Regler zu entwerfen, wie dies beispielsweise in der europäischen Patentanmeldung EP 3851678 A1 der Fall ist. Die Affinitätsgesetze müssen bei einer Anlagenkennlinie (Rohrnetzparabel), die nicht durch den Ursprung geht, angepasst werden, um die geodätische Höhe zu kompensieren.

Aufgabe der vorliegenden Erfindung ist es, ein Verfahren zur Regelung einer Kreiselpumpe zur Verfügung zu stellen, das ohne Ermittlung der Anlagenkennlinie sowie auch ohne Ermittlung einer gegebenenfalls vorhandenen geodätischen Höhe auskommt, und einen Sollwert für den Druck oder die Förderhöhe ohne oder zumindest ohne wesentliches Überschwingen einstellt. Ferner ist es Aufgabe der Erfindung, eine dieses Verfahren ausführende Regelungselektronik sowie eine Kreiselpumpe mit einer solchen Regelungselektronik zur Verfügung zu stellen.

Diese Aufgaben werden durch ein Verfahren mit den Merkmalen des Anspruchs 1, eine Regelungselektronik mit den Merkmalen des Anspruchs 4 und eine Kreiselpumpe nach Anspruch 7 gelöst. Vorteilhafte Weiterbildungen sind in den Unteransprüchen angegeben und werden nachfolgende erläutert.

Erfindungsgemäß wird vorgeschlagen, das gattungsgemäße Verfahren dahingehend weiterzubilden, dass die Wurzel der vom Hydraulikregler ausgegebenen Stellgröße berechnet wird und der Drehzahlregler den Drehzahlwert in Abhängigkeit der Wurzel der Stellgröße bestimmt.

In entsprechender Weise wird eine Regelungselektronik zur Regelung des Drucks oder der Förderhöhe einer Kreiselpumpe vorgeschlagen, umfassend einen Hydraulikregler, dem die Regelabweichung eines Istwerts zu einem Sollwert zugeführt ist und der eine Stellgröße ausgibt, einen dem Hydraulikregler nachgelagerten Drehzahlregler, der in Abhängigkeit der Stellgröße einen Drehzahlwert zur Einstellung an der Kreiselpumpe ausgibt, und eine signaltechnisch zwischen dem Hydraulikregler und dem Drehzahlregler angeordnete Wurzelberechnungseinheit zur Berechnung der Wurzel der Stellgröße, die dem Drehzahlregler zur Bestimmung des Drehzahlwerts zugeführt ist.

Der Kerngedanke der vorliegenden Erfindung besteht darin, eine herkömmliche Hydraulikregelung zu linearisieren, wobei dies ausschließlich anhand der Pumpenkurve (Pumpenkennlinie) erfolgt. Dadurch ist weder die Kenntnis der Anlagenkennlinie noch der geodätischen Höhe erforderlich. Durch die Verwendung der Wurzel der Stellgröße als Vorgabewert für den Drehzahlregler wird der vom Volumenstrom Q unabhängige aber vom Quadrat der Drehzahl n abhängige Druck- bzw. Förderhöhenanteil Ho = a·n² (Nullförderhöhe) in der Pumpenkennlinie

$$H(Q,n) = a \cdot n^2 - b \cdot Q \cdot n - c \cdot Q^2$$

kompensiert und damit zumindest ein Teil der nichtlinearen Regelstrecke linearisiert, die aus der Kreiselpumpe und dem angeschlossenen Rohrnetz besteht. Diese Linearisierung der Druck- bzw. Förderhöhenregelung bewirkt zum einen, dass sich in allen Arbeitspunkten ein annähernd gleiches dynamisches Verhalten ergibt. Zum anderen ergibt sich dadurch, dass nur der volumenstromunabhängige Teil ausgeglichen wird, im dynamischen Verhalten ein geringeres Überschwingen des Druckes bzw. der Förderhöhe.

Das erfindungsgemäße Regelungsverfahren ist sowohl zur Regelung eines Absolutdrucks am Ausgangs der Kreiselpumpe als auch zur Regelung eines Differenzdrucks zwischen dem Eingang und dem Ausgang der Kreiselpumpe geeignet. Es sei angemerkt, dass der Druck und die Förderhöhe bei einer Kreiselpumpe äquivalente Größen sind, weil sie proportional zueinander sind. Eine Druckregelung ist somit stets auch eine Regelung der Förderhöhe und umgekehrt. Sofern nachfolgend nur vom Druck oder nur von der Förderhöhe die Rede ist, ist deshalb auch stets die jeweils andere Größe Förderhöhe oder Druck (Absolutdruck oder Differenzdruck) gemeint bzw. zu verstehen.

Die Erfindung wird nachfolgend anhand der beigefügten Figuren näher erläutert. Es zeigen:

Figur 1: ein abstrahiertes regelungstechnisches Signalflussdiagramm zur Druckregelung einer Pumpe in einer Trinkwasserversorgung.

Figur 2: ein konkretisiertes Signalflussdiagramm entsprechend Figur 1

Figur 3: ein Signalflussdiagramm mit einer linearisierten Hydraulikregelung

Figur 4: ein Signalflussdiagramm mit einer modifizierten linearisierten Hydraulikregelung

Figur 5: ein Diagramm mit dem Verlauf der Förderhöhe und der Drehzahl über der Zeit

Figur 6: ein HQ-Diagramm mit dem Verlauf der Förderhöhe über dem Volumenstrom.

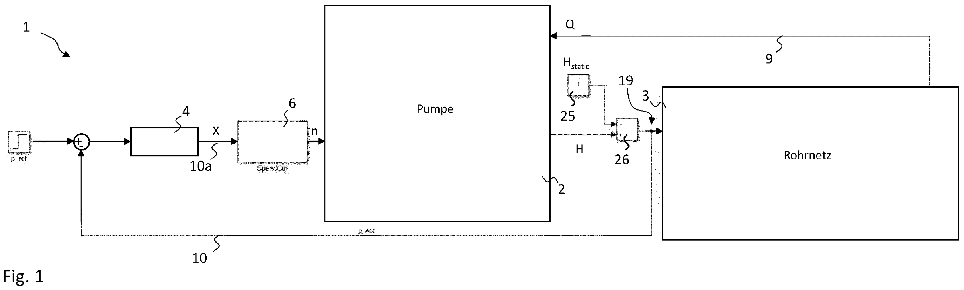

Figur 1 zeigt ein vereinfachtes Signalflussdiagramm einer regelungstechnischen Struktur 1 umfassend eine Kreiselpumpe 2, ein Rohrnetz 3, welches hier beispielhaft ein Trinkwasserversorgungsnetzwerk 3 ist, in dem die Pumpe 3 fördert, sowie einen Hydraulikregler 4 und einen Drehzahlregler 6, die gemeinsam zur Regelung des Drucks der Pumpe 2 vorgesehen sind. Hierzu wird dem Hydraulikregler 4 ein Sollwert p_ref für den Druck vorgegeben. Der Istwert des Drucks p_Act wird an einem Messpunkt 19 am Ausgang der Pumpe 2 erfasst und über den Rückführungszweig 10 auf den Eingang des Hydraulikreglers 4 negativ rückgekoppelt, so dass der Hydraulikregler 4 die Fehlerabweichung p_ref - p_Act erhält. Anstelle einer Messung kann der Druck p_Act aber auch mit Hilfe eines Beobachtermodells geschätzt werden. Der Hydraulikregler 4 gibt eine Stellgröße X aus, die auf den Eingang des Drehzahlreglers 6 geführt ist. Beispielsweise kann diese Stellgröße ein Drehmoment sein. Der Drehzahlregler 6 gibt in Abhängigkeit der Stellgröße X an seinem Ausgang eine Drehzahl n aus, mit der ein Laufrad der Kreiselpumpe 2 angetrieben wird, welche dadurch einen Differenzdruck respektive eine Förderhöhe H erzeugt. Signaltechnisch stellt die Drehzahl n somit eine Eingangsgröße und die Förderhöhe H eine Ausgangsgröße der Pumpe 2 dar.

Im Falle eines Rohrnetzes 2 der Trinkwasserversorgung existiert darin ein Versorgungsanschluss 25, über den das frische Trinkwasser mit einem Vordruck, auch Versorgungsdruck genannt, in das Rohrnetz 2 eingespeist wird. Die Pumpe 2 ist hier eine Boosterpumpe oder eine Pumpe einer Druckerhöhungsanlage. Dieser Vordruck erzeugt eine statische Förderhöhe $H_{static}$, die den Pumpendruck bzw. die Förderhöhe H der Pumpe 2 erhöht. In der regelungstechnischen Struktur 1 wird dies durch einen Subtrahierer 26 abgebildet, allerdings ist der Vordruck dadurch mit einem negativen Vorzeichen zu verwenden, um die Druckaddition zu erhalten. Bei einem anderen Rohrnetz, beispielsweise im Falle einer Bohrlochpumpe, kann eine geodätische Höhe $H_{geo}$ existieren, die eine entsprechende geodätische Förderhöhe $H_{static}$ erfordert, um einen Volumenstrom Q größer null zu erzeugen. In diesem Fall ist die geodätische Förderhöhe $H_{static}$ dann positiv, so dass sie richtigerweise von der Pumpenförderhöhe H im Subtrahierer 26 abgezogen wird. Somit ist das Modell der Regelstrecke in Figur 1 allgemeingültig. In geschlossenen Rohrnetzen, wie sie beispielsweise in Heizungs- oder Kühlungsanlagen existieren, ist die geodätische Höhe, mithin die zu deren Überwindung nötige statische Förderhöhe $H_{static}$ gleich null. Die parabelförmige Anlagenkennlinie $K_A$ beginnt in diesem Fall im Ursprung des HQ-Diagramms.

Der am Ausgang der Pumpe 2 vorliegende Gesamtdruck, hier ausgedrückt durch die Gesamtförderhöhe H - $H_{static}$, bildet signaltechnisch die Eingangsgröße des Rohrnetzes 3. Pumpe 2 und Rohrnetz 3 bilden gemeinsam die Regelstrecke der Regelungsstruktur 1. In Abhängigkeit des hydraulischen Widerstands $R_{hyd}$ des Rohrnetzes 2 wird infolge des Gesamtdrucks ein Volumenstrom Q im Rohrnetz 2 erzeugt, das folgemäßig die Ausgangsgröße des Rohrnetzes 2, gleichzeitig aber über den Rückkopplungspfad 9 auch eine Eingangsgröße der Pumpe 2 bildet, weil deren Förderhöhe H abhängig vom Volumenstrom Q ist.

Die das System (Regelstrecke) aus Kreiselpumpe 2 und Rohrnetz 3 beschreibende Differentialgleichung lautet:

$$\text{Gl 1:} \quad H = an^2 - bQn - cQ^2 = R_{hyd}Q + L_{hyd}\frac{dQ}{dt} + H_{geo}$$

In dieser Gleichung beschreibt der erste Teil die Pumpenkennlinie H(Q,n) und der zweite Teil die Anlagenkennlinie $K_A$, wobei der Arbeitspunkt der Kreiselpumpe im Schnittpunkt der beiden Kennlinien liegt. Es sind:

H die Förderhöhe der Kreiselpumpe,

Q der Volumenstrom der Kreiselpumpe,

n die Drehzahl der Kreiselpumpe,

$R_{hyd}$ der hydraulische Widerstand des Rohrleitungsnetzwerks

$L_{hyd}$ die hydraulische Induktivität des Rohrleitungsnetzwerks

$H_{geo}$ die geodätische Höhe des Rohrleitungsnetzwerks und

a, b, c jeweils ein die Pumpenkennlinie H(Q,n) beschreibender Pumpenparameter. Diese können sich von Pumpe zu Pumpe unterscheiden.

Der Drehzahlregler 6 kann ein üblicher PI-Regler sein. Ebenso kann für den Hydraulikregler 4 ein PI-Regler verwendet werden mit einem jeweiligen Verstärkungsfaktor $K_P$ und $K_I$ für den Proportional- und Integralanteil. Da die Regelstrecke 2, 3 aufgrund der quadratischen Abhängigkeit von der Drehzahl n im volumenstromunabhängigen Förderhöhenanteil Ho = a·n² (Nullförderhöhe) nichtlinear ist, ist es schwierig, einen Reglerentwurf bzw. eine Reglerparametrierung basierend auf Standard-Verfahren anzuwenden. Ein klassischer Regler würde so auch abhängig vom Arbeitspunkt [Q, n] der Pumpe 2 unterschiedliches Verhalten zeigen. Mit anderen Worten, ändert sich das Systemverhalten abhängig vom Arbeitspunkt.

Es lässt sich jedoch eine Maßnahme treffen, um diese Abhängigkeit zu reduzieren und die Strecke 2, 3 auf einfache Weise zu linearisieren, wie im Folgenden gezeigt wird. Dadurch ist es möglich, die Reglerparameter des Drehzahlreglers analytisch zu bestimmen und im Falle einer verzögerungsfreien Rückführung des ermittelten Drucks p_Act, wie sie in den Figuren angenommen ist, sogar ein dynamisches Führungs- und Störunterdrückungsverhalten zu erhalten, das der Dynamik (Zeitkonstante) des Drehzahlreglers 6 entspricht.

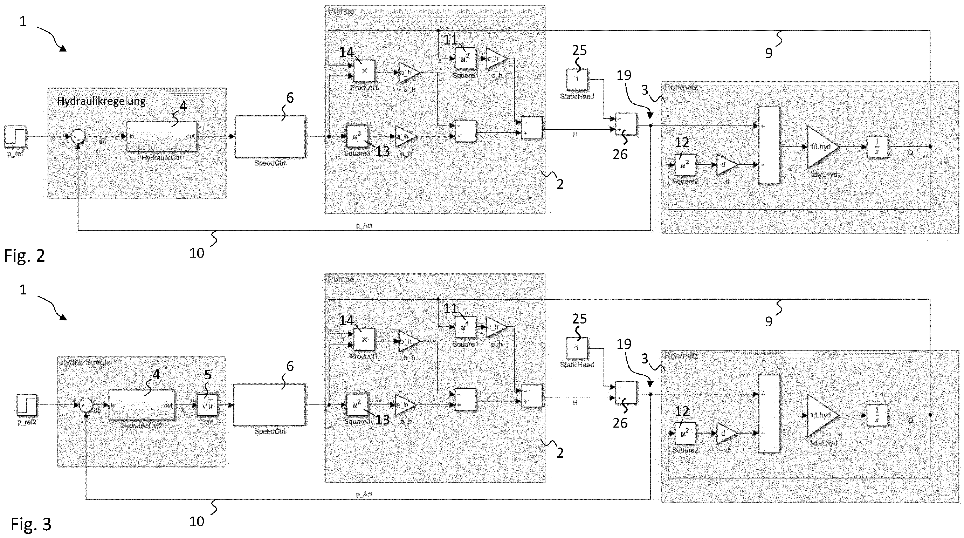

Dazu wird zunächst das in Figur 2 abgebildete hydraulische System 1 -ohne Verzögerung im Rückführungszweig 10- betrachtet, das die regelungstechnische Struktur 1 aus Figur 1 konkretisiert. Der Regelkreis ist hier wieder allgemein für Druck- oder Differenzdruckregelungen dargestellt. Die Pumpe 2 ist durch ein Signalmodell konkretisiert, das die Pumpenkennlinie

$$H(n, Q) = a\_h \cdot n^2 - b\_h \cdot Q \cdot n - c\_h \cdot Q^2$$

implementiert. Ferner ist das Rohrnetz 3 durch ein Signalmodell konkretisiert, das die Anlagenkennlinie $K_A$

$$H = R_{hyd}Q + L_{hyd}\frac{dQ}{dt} + H_{geo}$$

implementiert. Nichtlinearitäten ergeben sich durch die Quadratfunktionen (Square1, Square2, Square3) in den Quadrierern 11, 12, 13 und die Produktbildung (Product1) im Multiplizierer 14, wobei in diesem Regelkreis nur die Nichtlinearität von Interesse ist, die durch die Quadratfunktion (Square3) im dritten Quadrierer 13 bedingt ist, und in der Übertragungsfunktion $G_{nl}(s)$ von der Stellgröße X(s) des Hydraulikreglers 5 zum volumenstromunabhängigen Förderhöhenanteil Ho =a(n)² umfasst ist:

$$G_{nl}(s) = \frac{H_0(s)}{X(s)}$$

Diese Nichtlinearität hat sowohl Auswirkungen auf das Zeitverhalten, als auch auf die statische Verstärkung des Regelkreises. Das bedeutet, dass wenn für die Übertragungsfunktion $G_{nl}(s)$ ein lineares Ersatzsystem G(s) gefunden werden kann, dieses Ersatzsystem G(s) eine arbeitspunktabhängige statische Verstärkung V und eine Zeitkonstante $\tau$ wie folgt haben muss:

$$G(s) = \frac{V}{1 + \tau \cdot s}$$

Die Nichtlinearität kann durch das Einfügen eines Wurzelterms zwischen dem Hydraulikregler 4 und dem Drehzahlregler 6 korrigiert werden. Durch diese Korrektur beträgt die Verstärkung V = a_h. Das Zeitverhalten des Drehzahlreglers entspricht dann nicht mehr dem eines PT1 Gliedes mit Zeitkonstante $\tau_{SC}$, als das der Drehzahlregler betrachtet werden kann, jedoch kann eine Ersatzzeitkonstante $\tau_e$ gefunden werden, die dem zeitlichen Verhalten nahekommt, z.B. mit $\tau_e = \sqrt{2}\tau_{sc}$.

Die Linearisierung mittels eines Wurzelterms in Gestalt der Wurzelberechnungseinheit 5 ist in Figur 3 realisiert, die signaltechnisch zwischen dem Hydraulikregler 4 und dem Drehzahlregler 6 angeordnet ist, so dass zunächst die Wurzel aus der Stellgröße X des Hydraulikreglers 4 berechnet und das Ergebnis als modifizierte neue Stellgröße dem Drehzahlregler 6 übergeben wird.

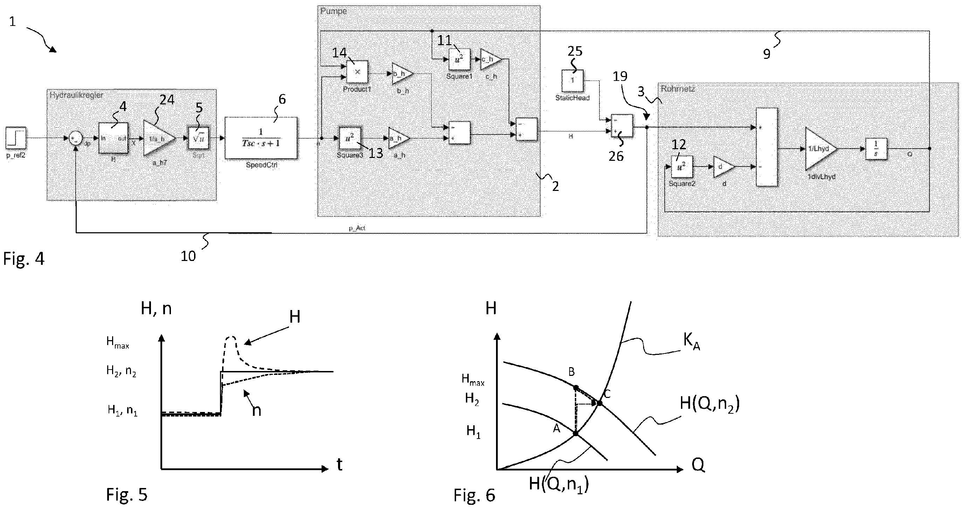

Durch die Linearisierung wird ein Überschwingen der Förderhöhe bei einer Sollwertänderung vermieden, wie Figur 5 veranschaulicht. Dargestellt in Figur 5 ist der Verlauf der Förderhöhe und der Drehzahl über der Zeit sowohl mit als auch ohne die erfindungsgemäße Linearisierung für den Fall einer sprunghaften Sollwertänderung der Förderhöhe von einem ersten Wert $H_1$ auf einen höheren zweiten Wert $H_2$. Figur 6 zeigt hierzu parallel die Situation im HQ-Diagramm.

Ausgegangen wird von einem Betriebspunkt A, bei dem die Pumpe 2 mit einer ersten Förderhöhe $H_1$ und Drehzahl $n_1$ betrieben wird, zu der die entsprechende Pumpenkennlinie $H(Q,n_1)$ eingezeichnet ist. Betriebspunkt A liegt im Schnittpunkt dieser Pumpenkennlinie $H(Q,n_1)$ und der Anlagenkennlinie $K_A$. Erfolgt ein Sollwertsprung in der Förderhöhe auf den höheren Wert $H_2$, erfolgt zur Erreichung dieser neuen Förderhöhe nach konventioneller Regelung ein Drehzahlsprung auf eine neue, höheren Drehzahl $n_2$ (durchgezogene Linie in Figur 5), zu der die entsprechende zweite Pumpenkennlinie $H(Q,n_2)$ ebenfalls in Figur 6 eingezeichnet ist. Bei konstantem Volumenstrom, schießt die Förderhöhe H dabei über auf den Wert $H_{max}$, der im Betriebspunkt B vorliegt, vergleiche Figuren 5 und 6. Entlang der zweiten Pumpenkennlinie $H(Q,n_2)$ wird die Förderhöhe H dann allmählich abgesenkt, bis im Betriebspunkt C die neue Sollförderhöhe $H_2$ erreicht ist. Den beschriebenen zeitlichen Verlauf der Förderhöhe beschreibt in Figur 5 die gestrichelte Linie.

Durch die erfindungsgemäße Linearisierung bzw. Anwendung der Regelungsstruktur gemäß Figur 3 wird dieses Überschießen vermieden. Wieder ausgehend von Betriebspunkt A erfolgt hier ein Förderhöhensprung von der ersten Förderhöhe $H_1$ direkt auf die neue Sollförderhöhe $H_2$. Die für den neuen Betriebspunkt C notwendige Drehzahl $n_2$ ist zunächst noch nicht erreicht. Hierzu wird die Drehzahl n allmählich, uns zwar annährend linear, bis zur Drehzahl $n_2$ erhöht, wie die gepunktete Kurve in Figur 5 zeigt. Es erfolgt somit kein Überschießen der Förderhöhe.

Als weitere Verbesserung kann hinter dem Hydraulikregler 4 noch ein Verstärker 24 mit einem Verstärkungsfaktor 1/a_h eingebracht werden, der den Pumpenparameter a_h kompensiert. Dies ist in Figur 4 realisiert. Die Verstärkung des Verstärkers 24 entspricht also dem Kehrwert der sogenannten Streckenverstärkung a_h, d.h. desjenigen Verstärkungsfaktors a_h, der die Verstärkung des volumenstromunabhängigen Anteils $Ho = a\_h \cdot n^2$ in der Pumpenkennlinie $H(Q,n)$ der Pumpe 2 (Strecke) beschreibt. Durch den Verstärker 24 mit seinem Verstärkungsfaktor 1/a_h erfolgt quasi eine Normierung des Hydraulikreglers 4 auf eine Referenzpumpe mit der Streckenverstärkung a_h, welche eine charakteristische Größe ist und sich von Pumpe zu Pumpe unterscheidet. Diese Normierung hat den Vorteil, dass die Parametrierung des Hydraulikreglers 4, genauer gesagt die Verstärkungsfaktoren $K_P$ für den Proportionalanteil und $K_I$ für den Integralanteil des Reglers 4 für sämtliche Pumpen 2 gleich bleiben können, während eine pumpenspezifische Anpassung des Hydraulikreglers nur in Bezug zu auf den Verstärkungsfaktor 1/a_h des Verstärkers 24 erfolgen muss. Dies ist bei konventioneller Reglerauslegung nicht möglich, da hier die Verstärkungsfaktoren $K_P$ und $K_I$ individuell auf die entsprechende Pumpe 2 ausgelegt sein müssen.

Falls eine nennenswerte Verzögerung im Rückführungszweig 10 vorhanden ist, kann dieser Effekt durch ein Verzögerungsglied bzw. eine Verzögerung im Vorwärtszweig 10a, beispielsweise vor oder hinter dem Drehzahlregler 6, berücksichtigt werden, in dem hier eine Verzögerung der Signalverarbeitung, genauer gesagt der Verarbeitung der Stellgröße X oder der Drehzahl n, mit wesentlich höherer Zeitkonstante eingeführt wird als die Zeitkonstante im Rückführungszweig 10, d.h. die Zeitkonstante der Verzögerung bei der Rückführung des Druckistwerts p_Act auf den Eingang des Hydraulikreglers 4. Auf diese Weise kann die Rückführung wieder als quasi Verzögerungsfrei angesehen werden. Die Dynamik der Regelung sinkt dabei allerdings.

Die in den Figuren verwendeten Parameter a_h und b_h folgen direkt aus der Pumpenkennlinie (GI.1) und können daher aus Messdaten bzw. Designdaten der Pumpe 2 abgeleitet werden. So entspricht der Parameter a_h dem Pumpenparameter a, der Parameter b_h dem Pumpenparameter b und der Parameter c_h dem Pumpenparameter c.

Der erfindungsgemäße Hydraulikregler 4, genauer gesagt der Druckregler, kann sowohl für Differenzdruck-, als auch für Absolutdruckregelungen verwendet werden. Es ist keine Unterscheidung zwischen den Regelarten "Differenzdruck-konstant" (dpc) und "Absolutdruck-konstant" (p-c) notwendig, da in beiden Fällen ein fehlender bzw. zu geringer Druck durch den von der Pumpe erzeugten Differenzdruck ausgeglichen wird.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

**Patentansprüche**

1. Verfahren zur Regelung des Drucks (p_Act) oder der Förderhöhe (H) einer Kreiselpumpe (2) unter Verwendung eines Hydraulikreglers (4), dem die Regelabweichung eines Istwerts (p_Act) zu einem Sollwert (p_ref) zugeführt wird und der eine Stellgröße (X) ausgibt, und eines dem Hydraulikregler (4) nachgelagerten Drehzahlreglers (6), der in Abhängigkeit der Stellgröße (X) einen Drehzahlwert (n) zur Einstellung an der Kreiselpumpe (2) ausgibt, **dadurch gekennzeichnet, dass** die Wurzel der Stellgröße (X) berechnet wird und der Drehzahlregler (6) den Drehzahlwert (n) in Abhängigkeit der Wurzel der Stellgröße (X) bestimmt.

2. Verfahren nach Anspruch 1, **dadurch gekennzeichnet, dass** vor oder hinter dem Drehzahlregler (6) eine Verzögerung der Signalverarbeitung mit einer Zeitkonstanten erfolgt, die wesentlich größer ist, als die Zeitkonstante einer Verzögerung bei der Rückführung des Istwerts (p_Act) auf den Eingang des Hydraulikreglers (4).

3. Verfahren nach Anspruch 1 oder 2, **dadurch gekennzeichnet, dass** die Stellgröße (X) mit dem Kehrwert eines Verstärkungsfaktors multipliziert wird, der die Verstärkung (a_h) des volumenstromunabhängigen Anteils in der Pumpenkennlinie der Kreiselpumpe (2) beschreibt.

4. Regelungselektronik zur Regelung des Drucks (p_Act) oder der Förderhöhe einer Kreiselpumpe (2) umfassend einen Hydraulikregler (5), dem die Regelabweichung eines Istwerts (p_Act) zu einem Sollwert (p_ref) zugeführt ist und der eine Stellgröße (X) ausgibt, und einen dem Hydraulikregler (5) nachgelagerten Drehzahlregler (6), der in Abhängigkeit der Stellgröße (X) einen Drehzahlwert (n) zur Einstellung an der Kreiselpumpe (2) ausgibt, **gekennzeichnet durch** eine signaltechnisch zwischen dem Hydraulikregler (5) und dem Drehzahlregler (6) angeordnete Wurzelberechnungseinheit (5) zur Berechnung der Wurzel der Stellgröße (X), die dem Drehzahlregler (6) zur Bestimmung des Drehzahlwerts (n) zugeführt ist.

5. Regelungselektronik nach Anspruch 4, **dadurch gekennzeichnet, dass** vor oder hinter dem Drehzahlregler (6) ein Verzögerungsglied zur Verzögerung der Signalverarbeitung mit einer Zeitkonstanten angeordnet ist, die wesentlich größer ist, als die Zeitkonstante einer Verzögerung in der Rückführung des Istwerts (p_Act) auf den Eingang des Hydraulikreglers (4).

6. Regelungselektronik nach Anspruch 4 oder 5, **gekennzeichnet durch** einen signaltechnisch zwischen dem Hydraulikregler (5) und dem Drehzahlregler (6) angeordneten Verstärker (24), dessen Verstärkung dem Kehrwert eines Verstärkungsfaktors entspricht, der die Verstärkung (a_h) des volumenstromunabhängigen Anteils in der Pumpenkennlinie der Kreiselpumpe (2) beschreibt.

7. Kreiselpumpe (2) umfassend eine Regelungselektronik nach einem der Ansprüche 4 bis 6.

Fig. 1

Fig. 2

Fig. 3

EP 4 206 471 A1

8

Fig. 4

Fig. 5

Fig. 6

Europäisches Patentamt
European Patent Office
Office européen des brevets

## EUROPÄISCHER RECHERCHENBERICHT

**Nummer der Anmeldung**

EP 22 19 6812

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 905 596 A2 (KSB AG [DE]) 31. März 1999 (1999-03-31) | 1,4,7 | INV. F04D15/00 |
| Y | * Absatz [0017] * | 2,5 | |
| A | * Absatz [0027] * | 3,6 | |
| | * Absatz [0047] * | | |
| | * Absatz [0051] – Absatz [0054] * | | |
| | * Absatz [0060] – Absatz [0061] * | | |
| | * Absatz [0071] * | | |
| | * Abbildungen 1, 4 * | | |
| | ───── | | |
| X | US 4 259 038 A (JORGENSEN IVER ET AL) 31. März 1981 (1981-03-31) | 1,4,7 | |
| Y | * Spalte 4, Zeile 39 – Zeile 51 * | 2,5 | |
| A | * Spalte 5, Zeile 11 – Zeile 43 * | 3,6 | |
| | * Abbildung 2 * | | |
| | ───── | | |
| Y | DE 198 42 565 A1 (KSB AG [DE]) 9. März 2000 (2000-03-09) | 2,5 | |
| | * Absatz [0030] * | | |
| | ───── | | |
| A | DE 10 2017 203926 A1 (KSB SE & CO KGAA [DE]) 13. September 2018 (2018-09-13) | 1-7 | |
| | * Absatz [0026] * | | |
| | ───── | | |

**RECHERCHIERTE SACHGEBIETE (IPC)**

F04D

Der vorliegende Recherchenbericht wurde für alle Patentansprüche erstellt

| Recherchenort | Abschlußdatum der Recherche | Prüfer |
|---|---|---|
| Den Haag | 10. Mai 2023 | Oliveira, Damien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 6812

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2023

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0905596 | A2 | 31-03-1999 | DE | 19742799 | A1 | 15-04-1999 |
| | | | EP | 0905596 | A2 | 31-03-1999 |
| US 4259038 | A | 31-03-1981 | DE | 2756916 | A1 | 28-06-1979 |
| | | | DK | 561078 | A | 22-06-1979 |
| | | | GB | 2010959 | A | 04-07-1979 |
| | | | JP | S5491803 | A | 20-07-1979 |
| | | | SE | 425988 | B | 29-11-1982 |
| | | | US | 4259038 | A | 31-03-1981 |
| DE 19842565 | A1 | 09-03-2000 | KEINE | | | |
| DE 102017203926 | A1 | 13-09-2018 | BR | 112019018578 | A2 | 14-04-2020 |
| | | | CN | 110382871 | A | 25-10-2019 |
| | | | DE | 102017203926 | A1 | 13-09-2018 |
| | | | EP | 3592978 | A1 | 15-01-2020 |
| | | | JP | 7074763 | B2 | 24-05-2022 |
| | | | JP | 2020510155 | A | 02-04-2020 |
| | | | RU | 2019131532 | A | 10-04-2021 |
| | | | WO | 2018162547 | A1 | 13-09-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3851678 A1